# FASCICULE DE BREVET EUROPEEN

(11) **EP 2 982 576 B1**
(45) Date de publication et mention de la délivrance du brevet: **31.05.2017**
(21) Numéro de dépôt: 15176220.0
(22) Date de dépôt: 10.07.2015
(51) Int. Cl.: B62D 25/16, B62D 25/18

(54) **PARE-BOUE ROTATIF**
DREHBARER SCHMUTZFÄNGER
ROTARY MUDGUARD

(30) Priorité: 06.08.2014 FR 1457643
(43) Date de publication de la demande: 10.02.2016
(73) Titulaire: Mecaplast France, 92140 Clamart (FR)
(72) Inventeur: ROUVIERE, Christophe, 01250 REVONNAS (FR)
(74) Mandataire: Delorme, Nicolas

(56) Documents cités:
- EP-A1- 2 366 614
- CN-A- 102 328 710
- US-A1- 2011 080 019

## Description

La présente invention concerne un pare-boue destiné à venir dans le passage de roue d'un véhicule.

Un pare-boue est un panneau en matière plastique ou textile en forme d'arche destinée à entourer une roue.

Lors du roulage d'un véhicule, les roues peuvent projeter, par exemple, de l'eau et des gravillons. Le pare-boue permet notamment de protéger les éléments moteurs de ces projections.

De plus, le pare-boue permet également d'atténuer la propagation des ondes sonores provenant d'une roue.

Les pare-boues connus présentent une forme en demi-cercle qui les rend volumineux.

Ainsi, le transport, de ce type de pare-boue, rapporté au volume de chaque pièce est relativement onéreux.

Dans ce contexte technique, un but de la présente invention est de fournir un pare-boue qui puisse être aisément conditionné en grande quantité et qui puisse être et transporté à moindre coût.

Un autre but de la présente invention est de proposer un pare-boue qui puisse être fabriqué à un coût réduit. Le CN 102 328 710 A est considéré comme l'état de la technique le plus proche de l'objet de la revendication indépendante 1, et décrit un pare-boue comprenant deux demi-coques, des moyens de jonction des demi-coques et des moyens d'assemblage du pare-boue, chaque demi-coque présentant sensiblement une forme courbe avec une face concave et une face convexe, les moyens de jonction permettant de configurer le pare-boue entre une position repliée dans laquelle les deux demi-coques sont superposées et une position déployée dans laquelle les deux demi-coques sont juxtaposées, et permettant la fixation mutuelle des deux demi-coques en position déployée. Selon une définition générale, l'invention concerne un pare-boue destiné à venir dans le passage de roue d'un véhicule. Le pare-boue comprend deux demi-coques, des moyens de jonction des demi-coques et des moyens d'assemblage du pare-boue au passage de roue d'un véhicule. Chaque demi-coque présente sensiblement une forme en quart de cercle avec une face concave et une face convexe. Les moyens de jonction permettent de configurer le pare-boue entre une position repliée dans laquelle les deux demi-coques sont superposées et une position déployée dans laquelle les deux demi-coques sont juxtaposées, pour former sensiblement un demi-cercle, et permettent la fixation mutuelle des deux demi-coques en position déployée.

La configuration du pare-boue en position repliée permet au pare-boue d'être peu volumineux et ainsi de pouvoir être aisément conditionné en grande quantité et transporté à moindre coût.

En outre, les moyens de jonction intégrés aux demi-coques peuvent être réalisés lors du moulage du pare-boue. Ainsi le pare-boue selon l'invention peut être fabriqué sans surcoût notable.

De plus, une première demi-coque comprend un axe et une seconde demi-coque présente un perçage. L'axe est conçu pour traverser le perçage et permettre le guidage en rotation des demi-coques.

L'utilisation d'un axe d'une première demi-coque coopérant avec un perçage d'une seconde demi-coque, permet à l'invention de proposer un guidage en rotation peu onéreux à fabriquer permettant le passage, du pare-boue, en position repliée ou déployée.

La première demi-coque comprend au moins une encoche, et la seconde demi-coque comprend au moins un harpon. Ledit au moins un harpon est adapté pour être encliqueté dans ladite au moins une encoche lorsque les deux demi-coques sont en position déployée.

Le harpon et l'encoche permettent avantageusement de solidariser rapidement les deux demi-coques lorsque le pare-boue est en position déployée, sans nécessiter de moyens d'assemblage externes.

En outre, l'axe présente une lamelle conçue pour permettre l'encliquetage de l'axe dans le perçage.

Ainsi, le pare-boue forme un ensemble lié en position repliée et en position déployée.

Chaque demi-coque comprend au moins un perçage de fixation au passage de roue du véhicule.

De manière préférentielle, chaque demi-coque comprend au moins un écran acoustique conçu pour absorber les ondes sonores provenant d'une roue.

La présente invention concerne aussi un procédé de fabrication d'un pare-boue. Le procédé comprend en outre les étapes prévoyant de :
I. Fournir un moule ;
II. Mouler les deux demi-coques dans le moule ;
III. Assembler les deux demi-coques dans le moule ;
IV. Ejecter du pare-boue du moule ;
V. Pivoter une demi-coque par rapport à l'autre pour que le pare-boue soit en position repliée.

Le moulage et l'assemblage des deux demi-coques dans le moule permettent de fabriquer le pare-boue à un coût réduit.

De plus, l'étape I prévoyant de fournir un moule, comprend en outre les étapes prévoyant de :
1.1. Réaliser deux empreintes de moulage conçues pour mouler les deux demi-coques dans une position dans laquelle l'axe est pré-positionné dans le perçage
1.2. Fournir un noyau conçu pour maintenir séparées les deux demi-coques;

Le moulage des deux demi-coques dans un unique moule permet au procédé selon l'invention d'être rapide sans induire de surcoût par rapport aux techniques de l'art antérieur.

De plus, le pré-positionnement des deux demi-coques dans le moule permet d'augmenter la rapidité du procédé selon l'invention en réduisant les manipulations nécessaires à l'assemblage des demi-coques.

L'étape Il prévoyant de mouler les deux demi-coques dans le moule, comprend en outre les étapes prévoyant de :
11.1. Introduire de la matière plastique liquide dans le moule ;
11.2. Conserver le moule fermé ;
11.3. Retirer le noyau ;
11.4. Ouvrir le moule ;

L'étape III prévoyant d'assembler les deux demi-coques dans le moule, comprend en outre les étapes prévoyant de :
111.1. Positionner des moyens de butée contre la seconde demi-coque, pour assurer un contre-appui ;
111.2. Déplacer la première demi-coque pour encliqueter l'axe dans le perçage ;

L'assemblage des deux demi-coques dans le moule permet au procédé selon l'invention d'être efficient sans induire de surcoût.

D'autres caractéristiques et avantages de l'invention se dégageront de la description qui va suivre, en regard des dessins annexés qui représentent une forme de réalisation de l'invention.
- La figure 1 est une vue schématique en perspective du pare-boue en position déployée ;
- La figure 2 est une vue schématique en perspective du pare-boue en position repliée ;
- La figure 3 est une vue en coupe A-A partielle des moyens de jonction des demi-coques et des moyens d'assemblage du pare-boue au passage de roue d'un véhicule ;
- La figure 4 est une vue perspective partielle du harpon et de l'encoche permettant de solidariser les demi-coques en position déployée.
- La figure 5 est une vue en coupe A-A partielle représentant le moulage du pare-boue ;
- La figure 6 est une vue en coupe A-A partielle représentant le retrait du noyau, du moule ;
- La figure 7 est une vue en coupe A-A partielle représentant l'ouverture du moule ;
- La figure 8 est une vue en coupe A-A partielle représentant l'assemblage des deux demi-coques, dans le moule ;
- La figure 9 est une vue en coupe A-A partielle représentant l'éjection, du pare-boue, du moule ;

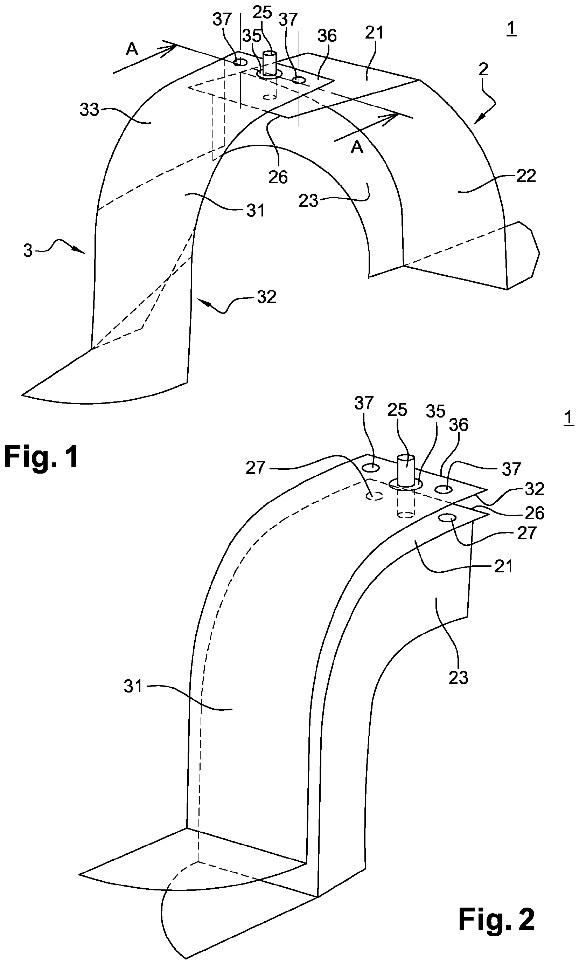

Le pare-boue 1 illustré sur la figure 1 présente une forme générale en demi-cercle et comprend deux demi-coques 2 et 3.

Comme on peut l'apprécier sur la figure 1, une première demi-coque 2 présente sensiblement une forme en quart de cercle, avec une face convexe 21 et une face concave 22.

De plus, la première demi-coque 2 comprend un flanc 23.

En outre, comme on peut l'observer, la première demi-coque 2 comprend un axe 25 positionné sur la face convexe 21 à proximité d'une extrémité 26 proximale.

Deux perçages de fixation 27 sont positionnés de part et d'autre de l'axe 25 suivant un axe AA.

La deuxième demi-coque 3 présente aussi une forme en quart de cercle, avec une face convexe 31 et une face concave 32.

La deuxième demi-coque comprend un flanc 33.

En outre, la deuxième demi-coque 3 présente un perçage 35 positionné à proximité d'une extrémité 36 et conçu pour recevoir l'axe 25.

Deux perçages de fixation 37 sont positionnés de part et d'autre du perçage 35 suivant un plan AA. Les deux perçages de fixation 37 sont conçus pour être positionnés en regard des deux perçages de fixation 27, pour permettre la fixation du pare-boue 1 dans le passage de roue d'un véhicule (non représenté).

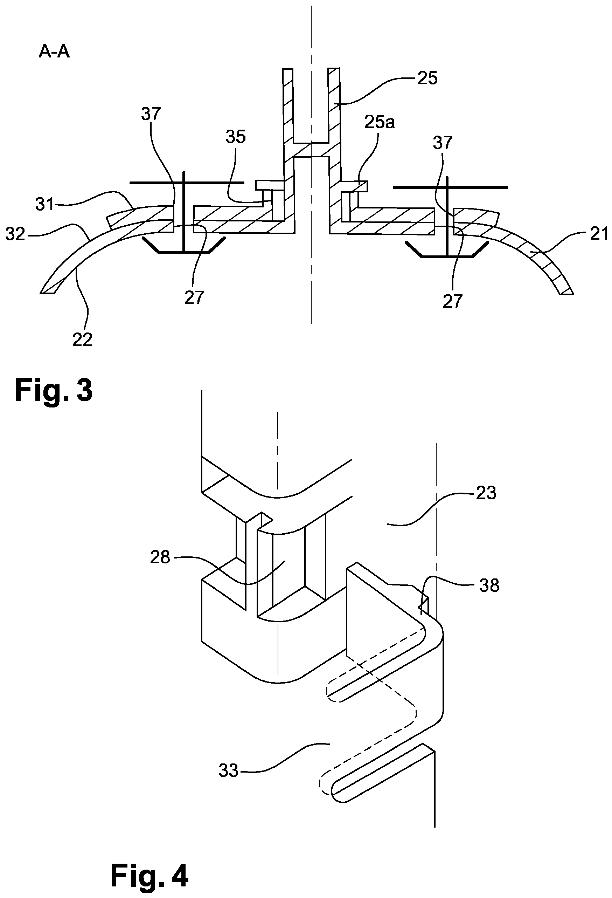

En référence à la figure 3, il est remarquable que l'axe 25 présente une lamelle annulaire 25a.

La lamelle annulaire 25a permet l'assemblage par encliquetage de l'axe 25 dans le perçage 35.

De plus, comme on peut l'observer sur la figure 2, une portion d'extrémité du flanc 23 de la première demi-coque 2 comprend une encoche 28.

De même, une portion d'extrémité du flanc 33 de la seconde demi-coque 3 comprend un harpon 38 qui est destiné à être encliqueté dans l'encoche 28.

A l'usage, l'axe 25 engagé dans le perçage 35 permet une rotation des deux demi-coques 2 et 3.

Ainsi, comme on peut le voir sur la figure 2, les deux demi-coques 2 et 3 peuvent être superposées dans une position dite repliée dans laquelle la surface convexe 21 de la première demi-coque 2 est placée dans la surface convexe 32 de la seconde demi-coque 3.

Il s'agit là d'une disposition particulièrement avantageuse de l'invention ; En effet, en position repliée, le pare-boue 1 occupe un volume réduit.

En position repliée le pare-boue 1 peut être aisément conditionné en grande quantité et transporté.

Ainsi, à volume de transport égal, l'invention permet de transporter de deux fois plus de pare-boue 1.

En outre, le pare-boue 1 peut aussi être configuré dans une position déployée, visible sur la figure 1.

En position déployée, les deux demi-coques 2 et 3 sont juxtaposées, pour former sensiblement un demi-cercle.

En position déployée, le harpon 38 est encliqueté dans l'encoche 28 pour solidariser les deux demi-coques 2 et 3.

Le pare-boue 1, en position déployée, est adapté pour être assemblé dans le passage de roue d'un véhicule.

Comme on peut l'observer sur la figure 3, l'assemblage du pare-boue 1 au passage de roue d'un véhicule, peut être réalisé en introduisant des rivets ou des vis dans les perçages de fixation 27 et 37.

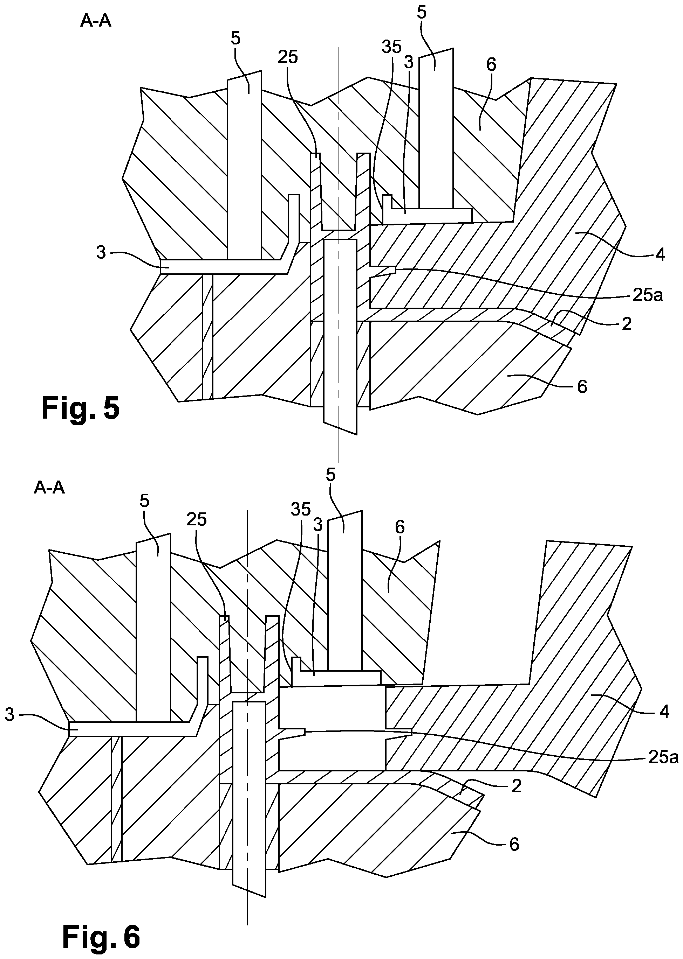

Le procédé de fabrication du pare-boue 1 est décrit sur les figures 5 à 9.

De manière préférentielle, le pare-boue 1 est réalisé en matière plastique.

Tel qu'illustré sur la figure 5, les deux demi-coques 2 et 3 sont réalisées dans un même moule 6 présentant deux empreintes.

Comme on peut l'observer sur la figure 5, les deux empreintes sont agencées de sorte que l'axe 25 soit pré-positionné dans le perçage 35 mais ne soit pas encliqueté.

Un noyau 4 permet d'espacer les deux demi-coques 2 et 3 pour conserver le pré-positionnement lors du moulage.

Le moule 6 peut être fermé et le moulage peut ensuite être effectué.

Il est ensuite possible de retirer le noyau 4, sans ouvrir le moule (voir figure 6).

Le moule 6 peut être ouvert après le retrait du noyau 4.

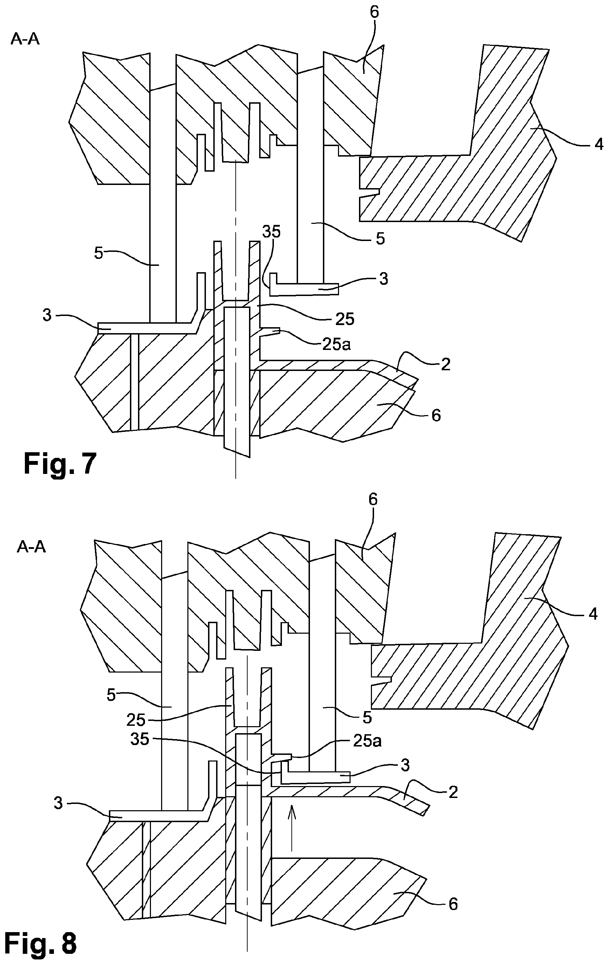

Des butées 5 peuvent être positionnées contre la seconde demi-coque 3, comme visible sur la figure 7.

La première demi-coque 2 peut être déplacée, suivant la flèche représentée sur la figure 8, pour encliqueter l'axe 25 dans le perçage 35.

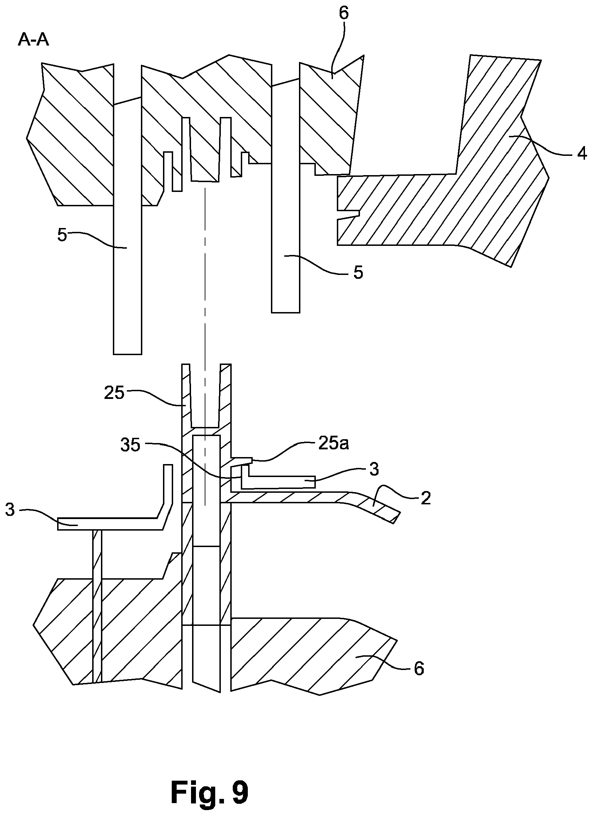

Le pare-boue 1 peut ensuite être éjecté du moule 6, comme on peut le voir sur la figure 9.

Le pare-boue 1 peut alors être configuré en position repliée puis peut être conditionné.

Ainsi l'invention propose un pare-boue de fabrication dont le coût est sensiblement équivalent à celui des pare-boues de l'art antérieur, qui peut être aisément transporté en position repliée. De plus le pare-boue selon l'invention est rapidement fonctionnel en position déployée.

Comme il va de soi, l'invention ne se limite pas à la seule forme de réalisation décrite ci-dessus à titre d'exemples, elle embrasse au contraire toutes les variantes de réalisation.

## Revendications

1. Pare-boue (1) destiné à venir dans le passage de roue d'un véhicule, le pare-boue (1) comprenant deux demi-coques(2-3), des moyens de jonction des demi-coques (2-3) et des moyens d'assemblage du pare-boue (1) au passage de roue d'un véhicule, chaque demi-coque (2-3) présentant sensiblement une forme en quart de cercle avec une face concave (22-32) et une face convexe (21-31), les moyens de jonction permettant de configurer le pare-boue (1) entre une position repliée dans laquelle les deux demi-coques (2-3) sont superposées et une position déployée dans laquelle les deux demi-coques (2-3) sont juxtaposées pour former sensiblement un demi-cercle, et permettant la fixation mutuelle des deux demi-coques (2-3) en position déployée.

2. Pare-boue (1) selon la revendication 1, **caractérisé en ce qu'**une première demi-coque (2) comprend un axe (25) et une seconde demi-coque (3) présente un perçage (35), l'axe (25) étant conçu pour traverser le perçage (35) et permettre le guidage en rotation des demi-coques (2-3).

3. Pare-boue (1) selon l'une des revendications 1 et 2, **caractérisé en ce que** la première demi-coque (2) comprend au moins une encoche (28), et la seconde demi-coque (3) comprend au moins un harpon (38), ledit au moins un harpon (38) étant adapté pour être encliqueté dans ladite au moins une encoche (28) lorsque les deux demi-coques (2-3) sont en position déployée.

4. Pare-boue (1) selon la revendication 2, **caractérisé en ce que** l'axe (25) présente une lamelle (25a) conçue pour permettre l'encliquetage de l'axe (25) dans le perçage (35).

5. Pare-boue (1) selon l'une des revendications 1 à 4, **caractérisé en ce que** chaque demi-coque (2-3) comprend au moins un perçage de fixation (27-37) au passage de roue du véhicule.

6. Pare-boue (1) selon l'une des revendications 1 à 5, **caractérisé en ce que** chaque demi-coque (2-3) comprend au moins un écran acoustique conçu pour absorber les ondes sonores provenant d'une roue.

7. Procédé de fabrication d'un pare-boue (1) selon l'une des revendications 1 à 6, **caractérisé en ce que** procédé comprend en outre les étapes prévoyant de :
I. Fournir un moule (6);
II. Mouler les deux demi-coques (2-3) dans le moule (6) ;
III. Assembler les deux demi-coques (2-3) dans le moule (6) ;
IV. Ejecter du pare-boue (1) du moule (6) ;
V. Pivoter une demi-coque (2-3) par rapport à l'autre pour que le pare-boue (1) soit en position repliée.

8. Procédé de fabrication d'un pare-boue (1) selon la revendication 7, **caractérisé en ce que** l'étape I prévoyant de fournir un moule (6), comprend en outre les étapes prévoyant de :
1.1. Réaliser deux empreintes de moulage conçues pour mouler les deux demi-coques (2-3) dans une position dans laquelle l'axe (25) est pré-positionné dans le perçage (35) ;
1.2. Fournir un noyau (4) conçu pour maintenir séparées les deux demi-coques (2-3) ;

9. Procédé de fabrication d'un pare-boue (1) selon la revendication 8, **caractérisé en ce que** l'étape II prévoyant de mouler les deux demi-coques (2-3) dans le moule (6), comprend en outre les étapes prévoyant de :
11.1. Introduire de la matière plastique liquide dans le moule (6) ;
11.2. Conserver le moule (6) fermé ;
11.3. Retirer le noyau (4) ;
11.4. Ouvrir le moule (6) ;

10. Procédé de fabrication d'un pare-boue (1) selon la revendication 9, **caractérisé en ce que** l'étape III prévoyant d'assembler les deux demi-coques (2-3) dans le moule (6), comprend en outre les étapes prévoyant de :
111.1. Positionner des moyens de butée contre la seconde demi-coque (3), pour assurer un contre-appui ;
111.2. Déplacer la première demi-coque (2) pour encliqueter l'axe (25) dans le perçage (35);

## Patentansprüche

1. Schmutzfänger (1), der dazu bestimmt ist, in den Radkasten eines Fahrzeugs eingesetzt zu werden, wobei der Schmutzfänger (1) zwei Halbschalen (2-3), Mittel zum Verbinden der Halbschalen (2-3) und Mittel zum Zusammensetzen des Schmutzfängers (1) im Radkasten eines Fahrzeugs umfasst, wobei jede Halbschale (2-3) im Wesentlichen eine Form eines Viertelkreises mit einer konkaven Seite (22-32) und einer konvexen Seite (21-31) aufweist, es die Mittel zum Verbinden ermöglichen, den Schmutzfänger (1) zwischen einer eingeklappten Position, in der die beiden Halbschalen (2-3) überlagert sind, und einer ausgeklappten Position zu konfigurieren, in der die beiden Halbschalen (2-3) nebeneinander liegen, um im Wesentlichen einen Halbkreis zu bilden, und die wechselseitige Befestigung der beiden Halbschalen (2-3) in der ausgeklappten Position ermöglichen.

2. Schmutzfänger (1) nach Anspruch 1, **dadurch gekennzeichnet, dass** eine erste Halbschale (2) eine Achse (25) umfasst, und eine zweite Halbschale (3) eine Bohrung (35) aufweist, wobei die Achse (25) gestaltet ist, um durch die Bohrung (35) zu verlaufen, und die Drehführung der Halbschalen (2-3) zu ermöglichen.

3. Schmutzfänger (1) nach einem der Ansprüche 1 und 2, **dadurch gekennzeichnet, dass** die erste Halbschale (2) zumindest eine Einkerbung (28) umfasst, und die zweite Halbschale (3) zumindest eine Harpune (38) umfasst, wobei die besagte zumindest eine Harpune (38) ausgeführt ist, um in die besagte zumindest eine Einkerbung (28) eingerastet zu werden, wenn sich die beiden Halbschalen (2-3) in der ausgeklappten Position befinden.

4. Schmutzfänger (1) nach Anspruch 2, **dadurch gekennzeichnet, dass** die Achse (25) eine Lamelle (25a) aufweist, die gestaltet ist, um das Einrasten der Achse (25) in die Bohrung (35) zu ermöglichen.

5. Schmutzfänger (1) nach einem der Ansprüche 1 bis 4, **dadurch gekennzeichnet, dass** jede Halbschale (2-3) zumindest eine Bohrung (27-37) zum Befestigen am Radkasten des Fahrzeugs umfasst.

6. Schmutzfänger (1) nach einem der Ansprüche 1 bis 5, **dadurch gekennzeichnet, dass** jede Halbschale (2-3) zumindest eine Schallwand umfasst, die gestaltet ist, um die Schallwellen aus einem Rad zu absorbieren.

7. Verfahren zur Herstellung eines Schmutzfängers (1) nach einem der Ansprüche 1 bis 6, **dadurch gekennzeichnet, dass** das Verfahren darüber hinaus die folgenden Schritte umfasst:
I. Bereitstellen einer Form (6);
II. Gießen der beiden Halbschalen (2-3) in der Form (6);
III. Zusammensetzen der beiden Halbschalen (2-3) in der Form (6);
IV. Auswerfen des Schmutzfängers (1) aus der Form (6);
V. Schwenken einer Halbschale (2-3) im Verhältnis zur anderen, damit sich der Schmutzfänger (1) in der eingeklappten Position befindet.

8. Verfahren zur Herstellung eines Schmutzfängers (1) nach Anspruch 7, **dadurch gekennzeichnet, dass** der Schritt I, der das Bereitstellen einer Form (6) vorsieht, darüber hinaus die folgenden Schritte umfasst:
1.1. Ausbilden von zwei Formprägungen, die gestaltet sind, um die beiden Halbschalen (2-3) in einer Position zu gießen, in der die Achse (25) in der Bohrung (35) vorpositioniert ist;
1.2. Bereitstellen eines Kerns (4), der gestaltet ist, um die beiden Halbschalen (2-3) voneinander getrennt zu halten.

9. Verfahren zur Herstellung eines Schmutzfängers (1) nach Anspruch 8, **dadurch gekennzeichnet, dass** der Schritt II, der das Gießen der beiden Halbschalen (2-3) in der Form (6) vorsieht, darüber hinaus die folgenden Schritte umfasst:
II.1. Einbringen des flüssigen Kunststoffmaterials in die Form (6);
11.2. Geschlossen halten der Form (6);
II.3. Entfernen des Kerns (4);
II.4. Öffnen der Form (6).

10. Verfahren zur Herstellung eines Schmutzfängers (1) nach Anspruch 9, **dadurch gekennzeichnet, dass** der Schritt III, der das Zusammensetzen der beiden Halbschalen (2-3) in der Form (6) vorsieht, darüber hinaus die folgenden Schritte umfasst:
III.1. Positionieren der Anschlagmittel an der zweiten Halbschale (3), um für ein Gegenlager zu sorgen;
III.2. Verschieben der ersten Halbschale (2) zum Einrasten der Achse (25) in die Bohrung (35).

## Claims

1. A mudguard (1) intended to fit into the wheel arch of a vehicle, the mudguard (1) comprising two half-shells (2-3), means for joining the half-shells (2-3) and means for assembling the mudguard (1) to the wheel arch of a vehicle, each half-shell (2-3) having substantially a shape of a quadrant with a concave face (22-32) and a convex face (21-31), the joining means allowing to configure the mudguard (1) between a folded position in which the two half-shells (2-3) are superimposed and a deployed position in which the two half-shells (2-3) are juxtaposed to form substantially a semicircle, and allowing the two half-shells (2-3) to be mutually fixed in the deployed position.

2. The mudguard (1) according to claim 1, **characterized in that** a first half-shell (2) comprises an axis (25) and a second half-shell (3) has a bore (35), the axis (25) being designed to pass through the bore (35) and to allow guiding in rotation the half-shells (2-3).

3. The mudguard (1) according to any of claims 1 or 2, **characterized in that** the first half-shell (2) comprises at least one notch (28), and the second half-shell (3) comprises at least one harpoon (38), said at least one harpoon (38) being adapted to be snapped into said at least one notch (28) when the two half-shells (2-3) are in the deployed position.

4. The mudguard (1) according to claim 2, **characterized in that** the axis (25) has a lamella (25a) designed to allow the axis (25) to be snapped into the bore (35).

5. The mudguard (1) according to any of claims 1 to 4, **characterized in that** each half-shell (2-3) comprises at least one fixing bore (27-37) at the wheel arch of the vehicle.

6. The mudguard (1) according to any of claims 1 to 5, **characterized in that** each half-shell (2-3) comprises at least one acoustic shield designed to absorb the sound waves coming from a wheel.

7. A method for manufacturing a mudguard (1) according to any of claims 1 to 6, **characterized in that** the method further comprises the steps of:
I. Providing a mold (6);
II. Molding the two half-shells (2-3) in the mold (6);
III. Assembling the two half-shells (2-3) into the mold (6);
IV. Ejecting the mudguard (1) from the mold (6);
V. Pivoting one half-shell (2-3) with respect to the other so that the mudguard (1) is in the folded position.

8. The method for manufacturing a mudguard (1) according to claim 7, **characterized in that** the step I of providing a mold (6) further comprises the steps of:
1.1. Making two mold cavities designed to mold the two half-shells (2-3) in a position in which the axis (25) is pre-positioned in the bore (35);
I.2. Providing a core (4) designed to keep the two half-shells (2-3) separated.

9. The method for manufacturing a mudguard (1) according to claim 8, **characterized in that** the step II of molding the two half-shells (2-3) in the mold (6) further comprises the steps of:
11.1. Introducing the liquid plastic material into the mold (6);
II.2. Keeping the mold (6) closed;
11.3. Removing the core (4);
11.4. Opening the mold (6).

10. The method for manufacturing a mudguard (1) according to claim 9, **characterized in that** the step III of assembling the two half-shells (2-3) in the mold (6) further comprises the steps of:
III.1. Positioning stop means against the second half-shell (3) in order to ensure an abutment;
111.2. Moving the first half-shell (2) in order to snap the axis (25) into the bore (35).
